# EUROPEAN PATENT SPECIFICATION

(11) **EP 2 185 667 B1**
(45) Date of publication and mention of the grant of the patent: **02.03.2011**
(21) Application number: 08830149.4
(22) Date of filing: 15.09.2008
(51) Int. Cl.: C09K 11/81, C09K 11/78, C09K 11/66, C09K 11/80

(54) **PHOSPHOR BLEND FOR A COMPACT FLUORESCENT LAMP AND LAMP CONTAINING SAME**
PHOSPHORMISCHUNG FÜR EINE KOMPAKTE FLUORESZIERENDE LAMPE UND LAMPE DAMIT
MÉLANGE LUMINOPHORE POUR UNE LAMPE FLUORESCENTE COMPACTE ET LAMPE LE CONTENANT

(30) Priority: 14.09.2007 US 972543 P
(43) Date of publication of application: 19.05.2010
(73) Proprietor: Osram Sylvania, Inc., Danvers, Massachusetts 01923 (US)
(72) Inventor: CAVALLARO, Albert, M., Durham, New Hampshire 03824, (US); CHAU, Chung Nin, Sayre, Pennsylvania 18840 (US); HUNT, Roger, B., Jr., Medfield, Massachusetts 02052, (US); LEVIN, Robert, E., Salem, Massachusetts 01970 (US)
(74) Representative: Viering, Jentschura & Partner
(86) International application number: PCT/US2008/076405
(87) International publication number: WO 2009/036425

(56) References cited:
- EP-A- 1 184 893
- GB-A- 2 408 382
- GB-A- 2 411 176

## Description

### Background of the Invention

The compact fluorescent lamp (CFL) is finding a greater acceptance in residential lighting applications. This is important for world-wide energy consumption as CFL's are more energy efficient than conventional incandescent lamps. In particular, light produced by a lamp is defined in terms of total luminous flux or lamp lumens. The light produced relative to the input power of the lamp is generally quantified in terms of lumens per watt (LPW). CFLs typically operate in the 50-90 LPW range, in contrast to conventional incandescent lamps that operate in the 15-30 LPW range. Hence, CFL lamps can produce an equivalent light output at one-half to one-third of the power consumption.

Despite this significant advantage in energy savings, barriers to even greater acceptance of CFLs still exist. One of these barriers is that a significant percentage of people remain dissatisfied with the quality of the light produced by CFLs. One measure of light quality is the color rendering index (CRI) which is a measure of the capability of a light source to illuminate an object's hues without distortion. CFL lamps typically have a CRI > 80 which is considered high for other artificial light sources such as HID and linear fluorescent lamps. Yet despite their high CRI, the color quality of the CFL lamp is generally found deficient or unacceptable. Therefore, it would be an advantage to find a more "pleasing" light that would lead to a greater acceptance of CFL lamps.

GB 2 411 176 discloses a light source comprising a phosphor blend, that emits efficiently visible light. The phosphor blend comprises a trivalent europium activated oxide phosphor and at least an additional phosphor selected from: BaMgAl₁₀O₁₇: Eu; LaPO_{H}: Ce, Tb; Y₂O₃: Eu;

Mg₄geO_{5.5} F: Mn etc.

### Summary of the Invention

It is an object of the invention to obviate the disadvantages of the prior art.

It is another object of the invention to provide a phosphor blend for use in a compact fluorescent lamp.

It is a further object of the invention to provide a compact fluorescent lamp that emits light that is more pleasing to a majority of human observers.

In accordance with one object of the invention, there is provided a phosphor blend comprising: a LaPO₄:Ce³⁺,Tb³⁺ phosphor, a Y₂O₃:Eu³⁺ phosphor, a Sr₆BP₅O₂₀:Eu²⁺ phosphor, a Mg₄GeO_{5.5}F:Mn⁴⁺ phosphor, and optionally a BaMgAl₁₁O₁₇:Eu²⁺ phosphor, wherein the blend contains from 5% to 20% by weight of the Sr₆BP₅O₂₀:Eu²⁺ phosphor and from 5% to 30% by weight of the Mg₄GeO_{5.5}F:Mn⁴⁺ phosphor. Preferably, the phosphor blend also contains from 40% to 70% by weight of the Y₂O₃:Eu³⁺ phosphor, from 20% to 50% by weight of the LaPO₄:Ce³⁺,Tb³⁺ phosphor, and from 0 to 10% by weight of the BaMgAl₁₁O₁₇:Eu²⁺ phosphor.

In another embodiment, the phosphor blend comprises from 20% to 30% by weight of a LaPO₄:Ce³⁺,Tb³⁺ phosphor, from 40% to 70% by weight of a Y₂O₃:Eu³⁺ phosphor, from 1% to 5% by weight of a Sr₆BP₅O₂₀:Eu²⁺ phosphor, from 10% to 30% by weight of a Mg₄GeO_{5.5}F:Mn⁴⁺ phosphor, and from 0 to 2% by weight of a BaMgAl₁₁O₁₇:Eu²⁺ phosphor.

In a further embodiment, the phosphor blend comprises about 27% by weight of a LaPO₄:Ce³⁺,Tb³⁺ phosphor, about 54% by weight of a Y₂O₃:Eu³⁺ phosphor, about 5% by weight of a Sr₆BP₅O₂₀:Eu²⁺ phosphor, about 15% by weight of a Mg₄GeO_{5.5}F;Mn⁴⁺_{,} phosphor, and less than about 0.1 % by weight of a BaMgAl₁₁O₁₇:Eu²⁺ phosphor.

### Brief Description of the Drawings

Fig. 1 is a spectral power distribution of a CFL lamp made with a LaPO₄:Ce³⁺,Tb³⁺ (LAP) phosphor.

Fig. 2 is a spectral power distribution of a CFL lamp made with a Y₂O₃:Eu³⁺ phosphor (YOE).

Fig. 3 is a spectral power distribution of a CFL lamp made with a BaMgAl₁₁O₁₇:Eu²⁺ phosphor (BAM).

Fig. 4 is a spectral power distribution of a CFL lamp made with a Sr₆BP₅O₂₀:Eu²⁺ phosphor.

Fig. 5 is a spectral power distribution of a CFL lamp made with a Mg₄GeO_{5.5}F:Mn⁴⁺ phosphor.

Fig. 6 is a plot of the x,y color coordinates of a standard CFL lamp and an enhanced CFL lamp according to this invention.

Fig. 7 is an illustration of a compact fluorescent lamp.

### Detailed Description of the Invention

For a better understanding of the present invention, together with other and further objects, advantages and capabilities thereof, reference is made to the following disclosure and appended claims taken in conjunction with the above-described drawings.

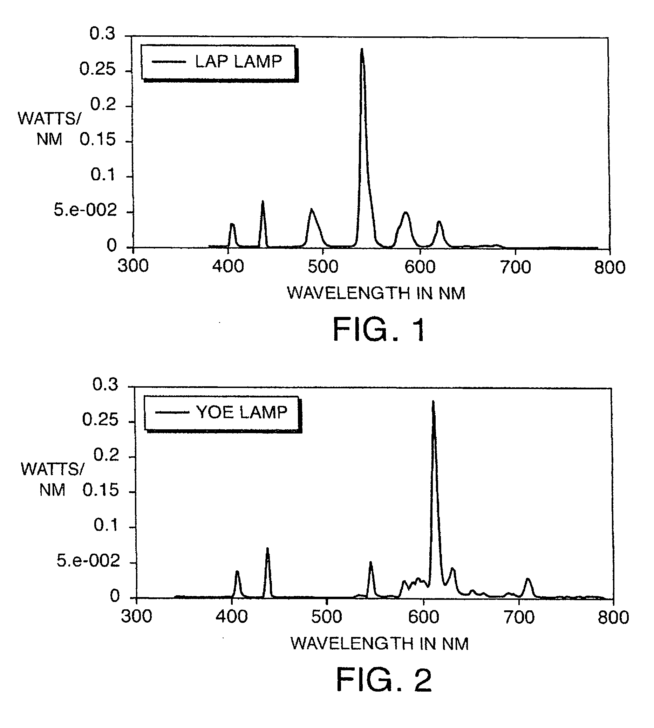

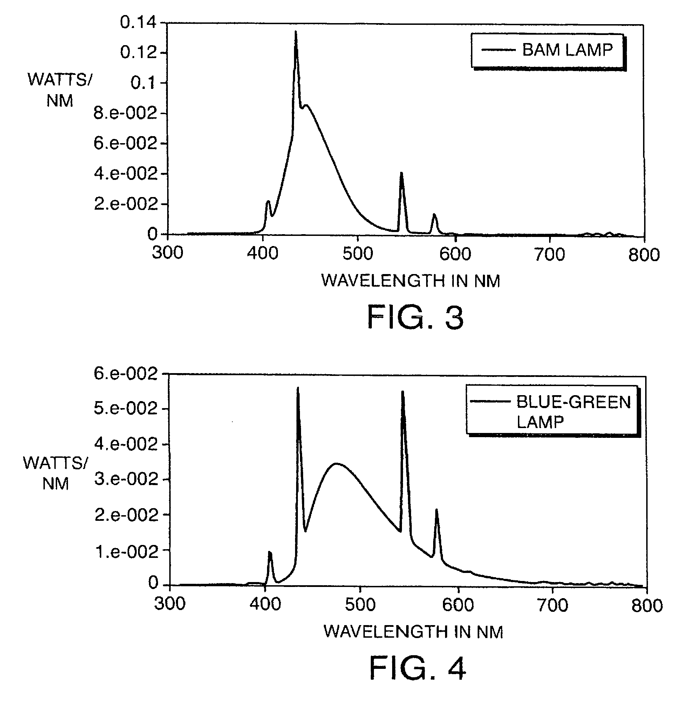

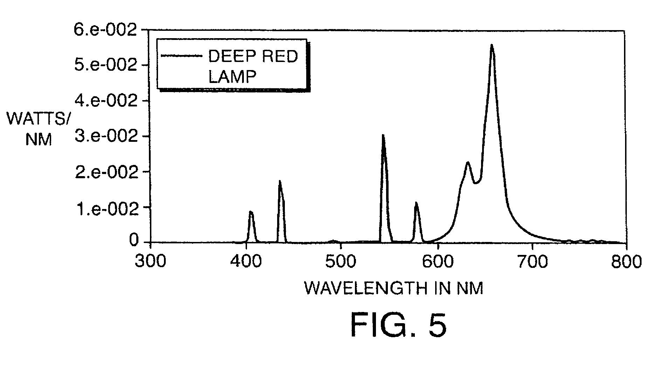

Human surveys were conducted to identify a phosphor blend that could be used in a CFL lamp to produce light having a more "pleasing" quality. In order perform the surveys, a variety of CFL lamps were constructed with individual phosphor types that ranged from deep-blue to deep-red emitting. The test lamps containing the individual phosphor types are listed in Table 1 and their spectral power distributions are shown in Figs. 1-5.

**Table 1**

| Phosphor | Emission Color | Spectral Power Distribution |
|---|---|---|
| LaPO₄:Ce³⁺,Tb³⁺ (LAP) | yellow-green | Fig. 1 |
| Y₂O₃:Eu³⁺ (YOE) | orange-red | Fig. 2 |
| BaMgAl₁₁O₁₇:Eu²⁺ (BAM) | deep blue | Fig. 3 |
| Sr₆BP₅O₂₀:Eu²⁺ (SBP) | blue-green | Fig. 4 |
| Mg₄GeO_{5.5}F:Mn⁴⁺ (MFG) | very deep red | Fig. 5 |

Using dimming ballasts, the light from these lamps was mixed in various proportions with the light from a primary 2700K white CFL lamp. A number of colored materials were then inspected under the mixed illumination. The colored materials ranged from pastel colors to saturated colors. With a first group of observers, it was possible to select two phosphor types that elicited a "pleasing" or "preferred" response from the observers. The colored materials generally appeared more "vivid" under the blended light source.

Using the results of this polling sample, 26W CFL lamps were produced with the individual phosphor types blended according to the proportions deduced in the initial screening with dimmed sources in order to produce white light near the standard 2700K correlated color temperature (CCT). Although 2700K was chosen as the target color temperature for this blend, similar effects are expected for other color temperatures, e.g., 3000K, 3500K, 4100K and 5000K. The composition of the enhanced CFL phosphor blend is given in Table 2.

**Table 2 - Enchanced CFL Blend**

| Phosphor | Weight Percentage |
|---|---|
| LaPO₄:Ce³⁺,Tb³⁺ (LAP) | 26.8% |
| Y₂O₃:Eu³⁺ (YOE) | 54.0% |
| BaMgAl₁₁O₁₇:EU²⁺, (BAM) | <0.1 % |
| Sr₆BP₅O₂₀:EU²⁺, (SBP) | 4.7% |
| Mg₄GeO_{5.5}F;Mn⁴⁺, (MFG) | 14.5% |

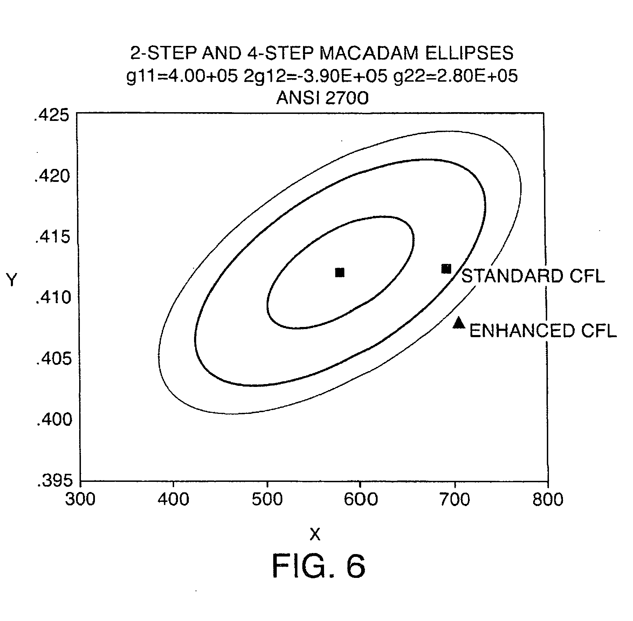

The color metrics of the enhanced CFL lamps are compared with the standard CFL lamp in Table 3 and Fig. 6.

**Table 3**

| Lamp | Lumens | x-chromaticity | y-chromaticity | CRI | Correlated Color Temperature |
|---|---|---|---|---|---|
| Enhanced CFL | 1184 | 0.465 | 0.408 | 87 | 2606 |
| Standard CFL | 1657 | 0.465 | 0.412 | 82 | 2648 |

These lamps were used to illuminate two separate, but identical viewing scenes consisting of: (1) manikins with colorful clothing, (2) manikins with dark clothing, (3) wooden furniture, (4) framed pictures, (5) fruits and vegetables, (6) cut flowers, and (7) neutral-toned walls and window trims. The purpose of these scenes was to represent typical items found in a household.

In the testing, incandescent lighting was included to represent a familiar polling control. The polling procedure was to ask a group of 35 observers, representing a range of age, sex and race to vote their preference for the appearance of the two viewing scenes as the illumination of the scenes was varied. The conditions for the different polls are given in Table 4.

**Table 4**

| | |
|---|---|
| Poll 1 | Both viewing scenes, (A) and (B) illuminated with incandescent lamps |
| Poll 2 | Viewing scenes illuminated with (A) incandescent and (B) enhanced CFL |
| Poll 3 | Viewing scenes illuminated with (A) incandescent and (B) enhanced CFL |
| Poll 4 | Viewing scenes illuminated with (A) standard CFL and (B) incandescent |
| Poll 5 | Viewing scenes illuminated with (A) standard and (B) enhanced CFL (replication of Poll 2) |
| Poll 6 | Viewing scenes illuminated with (A) standard and (B) enhanced CFL. Observers approached the illuminated areas and evaluated their skin tones. |

The observers were selected to represent an unbiased sample of age and sex (Table 5). No observers reported color vision deficiency. The polling results are presented in Table 6.

**Table 5**

| | Male | Female | Total |
|---|---|---|---|
| less than 40 years age | 7 | 9 | 16 |
| greater than 40 years age | 9 | 10 | 19 |
| Total | 16 | 19 | 35 |

**Table 6**

| All Participants | | | |
|---|---|---|---|
| Poll 1 | Incandescent | Incandescent | Undecided |
| Preferred | 16 | 15 | 4 |
| Poll 2 | Standard CFL | Enhanced CFL | Undecided |
| Preferred | 8 | 24 | 3 |
| Poll 3 | Incandescent | Enhanced CFL | Undecided |
| Preferred | 15 | 19 | 1 |
| Poll 4 | Standard CFL | Incandescent | Undecided |
| Preferred | 13 | 20 | 2 |
| Poll 5 (repeat of 2) | Standard CFL | Enhanced CFL | Undecided |
| Preferred | 7 | 20 | 8 |
| Poll 6 skin tone | Standard CFL | Enhanced CFL | Undecided |
| Preferred | 5 | 16 | 14 |

The control poll is Poll 1, where identical lamps were used in both chambers. Response variables were assigned as shown in Table 7.

**Table 7**

| Preferred Scene A | Preferred Scene B | No preference |
|---|---|---|
| -1 | 1 | 0 |

The mean value of the polls will become zero if there is no preference. The mean value will be positive if Scene A is preferred. The Student's T-test is then calculated to find the probability that the mean is zero, P(0) in Table 8. Polls 2, 5 and 6 are shown to be significantly different from zero. The means in these cases are all positive indicating the preference for the enhanced CFL lamps.

**Table 8**

| Variable | N | Mean | σ | Std Error in Mean | Mean 95% confidence interval | | T test | P(0) |
|---|---|---|---|---|---|---|---|---|
| Poll 1 | 35 | -0.029 | 0.954 | 0.161 | -0.356 | 0.299 | -0.18 | 0.86 |
| Poll 2 | 35 | 0.457 | 0.852 | 0.144 | 0.164 | 0.750 | 3.17 | 0.003 |
| Poll 3 | 35 | 0.114 | 0.993 | 0.168 | -0.227 | 0.455 | 0.68 | 0.501 |
| Poll 4 | 35 | 0.200 | 0.964 | 0.163 | -0.131 | 0.531 | 1.23 | 0.228 |
| Poll 5 | 35 | 0.371 | 0.808 | 0.136 | 0.094 | 0.649 | 2.72 | 0.01 |
| Poll 6 | 35 | 0.314 | 0.718 | 0.121 | 0.068 | 0.561 | 2.59 | 0.014 |

A paired t-test was also calculated to determine the mean difference from the control test, namely Poll 1. The probability that the polls differ from the control is found in P(0) in Table 9 below. Polls 2 and 5 are significantly different from zero. The mean difference in these cases are both positive indicating the preference for the enhanced CFL.

**Table 9**

| Variable | N | Mean Difference | σ | Std Error in Mean difference | Mean difference 95% confidence interval | | T test | P(0) |
|---|---|---|---|---|---|---|---|---|
| Poll 1 | 35 | 0.000 | 0.000 | 0.000 | 0.000 | 0.000 | na | na |
| Poll 2 | 35 | 0.486 | 1.245 | 0.211 | 0.058 | 0.914 | 2.31 | 0.027 |
| Poll 3 | 35 | 0.143 | 1.498 | 0.253 | -0.372 | 0.657 | 0.56 | 0.576 |
| Poll 4 | 35 | 0.229 | 1.239 | 0.209 | -0.197 | 0.654 | 1.09 | 0.283 |
| Poll 5 | 35 | 0.400 | 1.143 | 0.193 | 0.007 | 0.793 | 2.07 | 0.046 |
| Poll 6 | 35 | 0.343 | 1.187 | 0.201 | -0.065 | 0.751 | 1.71 | 0.097 |

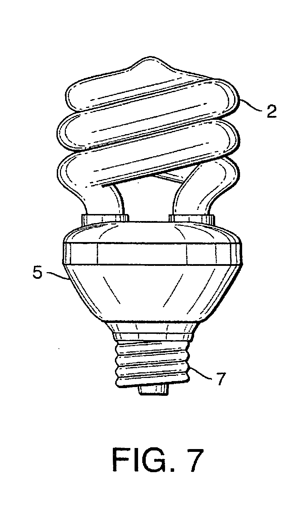

A compact fluorescent lamp is illustrated in Fig. 7. The lamp has a spiral-shaped tubular envelope 2 that has a phosphor coating containing a phosphor blend according to this invention on the inner surface of the tubular envelope. The envelope 2 further contains a small amount of mercury and a pair of electrodes for generating a low-pressure mercury gas discharge. The envelope 2 is mounted on a self-contained ballast 5 for operating the lamp and has a conventional screw base 7.

## Claims

1. A phosphor blend for a compact fluorescent lamp, comprising: a LaPO₄:Ce³⁺,Tb³⁺ phosphor, a Y₂O₃:Eu³⁺ phosphor, a Sr₆BP₅O₂₀:Eu²⁺ phosphor, a Mg₄GeO_{5.5}F;Mn⁴⁺ phosphor, and optionally a BaMgAl₁₁O₁₇:Eu²⁺ phosphor, wherein the blend contains from 5% to 20% by weight of the Sr₆BP₅O₂₀:Eu²⁺ phosphor and from 5% to 30% by weight of the Mg₄GeO_{5.5}F:Mn⁴⁺ phosphor.

2. The phosphor blend of claim 1 wherein the blend contains from 40% to 70% by weight of the Y₂O₃:Eu³⁺ phosphor, from 20% to 50% by weight of the LaPO₄:Ce³⁺,Tb³⁺ phosphor, and from 0 to 10% by weight of the BaMgAl₁₁O₁₇:Eu²⁺ phosphor.

3. A phosphor blend for a compact fluorescent lamp, comprising from 20% to 30% by weight of a LaPO₄:Ce³⁺,Tb³⁺ phosphor, from 40% to 70% by weight of a Y₂O₃:Eu³⁺ phosphor, from 1% to 5% by weight of a Sr₆BP₅O₂₀:Eu²⁺ phosphor, from 10% to 30% by weight of a Mg₄GeO_{5.5}F:Mn⁴⁺ phosphor, and from 0 to 2% by weight of a BaMgAl₁₁O₁₇:Eu²⁺ phosphor.

4. The phosphor blend of claim 3 wherein the phosphor blend contains about 27% by weight of the LaPO₄:Ce³⁺,Tb³⁺ phosphor, about 54% by weight of the Y₂O₃:Eu³⁺ phosphor, about 5% by weight of the Sr₆BP₅O₂₀:Eu²⁺ phosphor, about 15% by weight of the Mg₄GeO_{5.5}F:Mn⁴⁺ phosphor, and less than about 0.1 % by weight of the BaMgAl₁₁O₁₇:Eu²⁺ phosphor.

5. The phosphor blend of claim 4 wherein the phosphor blend contains 26.8% by weight of the LaPO₄:Ce³⁺,Tb³⁺ phosphor, 54.0% by weight of the Y₂O₃:Eu³⁺ phosphor, 4.7% by weight of the Sr₆BP₅O₂₀:Eu²⁺ phosphor, and 14.5% by weight of the Mg₄GeO_{5.5}F:Mn⁴⁺ phosphor.

6. A compact fluorescent lamp having a phosphor coating comprising a blend of a LaPO₄:Ce³⁺,Tb³⁺ phosphor, a Y₂O₃:Eu³⁺ phosphor, a Sr₆BP₅O₂₀:Eu²⁺ phosphor, a Mg₄GeO_{5.5}F:Mn⁴⁺ phosphor, and optionally a BaMgAl₁₁O₁₇:Eu²⁺phosphor, wherein the blend contains from 5% to 20% by weight of the Sr₆BP₅O₂₀:Eu²⁺ phosphor and from 5% to 30% by weight of the Mg₄GeO_{5.5}F:Mn4⁺ phosphor.

7. The compact fluorescent lamp of claim 6 wherein the blend contains from 40% to 70% by weight of the Y₂O₃:Eu³⁺ phosphor, from 20% to 50% by weight of the LaPO₄:Ce³⁺,Tb³⁺ phosphor, and from 0 to 10% by weight of the BaMgAl₁₁O₁₇:Eu²⁺ phosphor.

8. The compact fluorescent lamp of claim 6 wherein the lamp produces light having a correlated color temperature of about 2700K.

9. The compact fluorescent lamp of claim 6 wherein the blend contains from 20% to 30% by weight of the LaPO₄:Ce³⁺,Tb³⁺ phosphor, from 40% to 70% by weight of the Y₂O₃:Eu³⁺ phosphor, from 1% to 5% by weight of the Sr₆BP₅O₂₀:Eu²⁺ phosphor, from 10% to 30% by weight of the Mg₄GeO_{5.5}F:Mn⁴⁺ phosphor, and from 0 to 2% by weight of the BaMgAl₁₁O₁₇:Eu²⁺phosphor.

10. The compact fluorescent lamp of claim 9 wherein the blend contains about 27% by weight of the LaPO₄:Ce³⁺,Tb³⁺ phosphor, about 54% by weight of the Y₂O₃:Eu³⁺ phosphor, about 5% by weight of the Sr₆BP₅O₂₀:Eu²⁺ phosphor, about 15% by weight of the Mg₄GeO_{5.5}F:Mn⁴⁺ phosphor, and less than about 0.1 % by weight of the BaMgAl₁₁O₁₇:Eu²⁺ phosphor.

11. The compact fluorescent lamp of claim 10 wherein the blend contains 26.8% by weight of the LaPO₄:Ce³⁺,Tb³⁺ phosphor, 54.0% by weight of the Y₂O₃:Eu³⁺ phosphor, 4.7% by weight of the Sr₆BP₅O₂₀:Eu²⁺ phosphor, and 14.5% by weight of the Mg₄GeO_{5.5}F:Mn⁴⁺ phosphor.

12. The compact fluorescent lamp of claim 11 wherein the lamp produces light having a correlated color temperature of about 2700K.

## Patentansprüche

1. Eine Leuchtstoffmischung für eine kompakte Fluoreszenzlampe umfassend: ein LaPO₄:Ce³⁺,Tb³⁺ Phosphor, ein Y₂O₃:Eu³⁺ Phosphor, ein Sr₆BP₅O₂₀:Eu²⁺ Phosphor, ein Mg₄GeO_{5.5}F:Mn⁴⁺ Phosphor, und gegebenenfalls ein BaMgAl₁₁O₁₇:Eu²⁺Phosphor, wobei die Mischung von 5 bis 20 Gew.-% des Sr₆BP₅O₂₀:Eu²⁺ Phosphors und von 5 bis 30 Gew.-% des Mg₄GeO_{5.5}F:Mn⁴⁺ Phosphors enthält.

2. Die Leuchtstoffmischung nach Anspruch 1, wobei die Mischung von 40 bis 70 Gew.-% des Y₂O₃:Eu³⁺ Phosphors, von 20 bis 50 Gew.-% des LaPO₄:Ce³⁺,Tb³⁺ Phosphors und von 0 bis 10 Gew.-% des BaMgAl₁₁O₁₇:Eu²⁺ Phosphors enthält.

3. Eine Leuchtstoffmischung für eine kompakte Fluoreszenzlampe, umfassend von 20 bis 30 Gew.-% eines LaPO₄:Ce³⁺,Tb³⁺ Phosphors, von 40 bis 70 Gew.-% eines Y₂O₃:Eu³⁺ Phosphors, von 1 bis 5 Gew.-% eines Sr₆BP₅O₂₀:Eu²⁺ Phosphors, von 10 bis 30 Gew.-% eines Mg₄GeO_{5.5}F:Mn⁴⁺ Phosphors und von 0 bis 2 Gew.-% eines BaMgAl₁₁O₁₇:Eu²⁺ Phosphors.

4. Die Leuchtstoffmischung nach Anspruch 3, wobei die Leuchtstoffmischung ungefähr 27 Gew.-% des LaPO₄:Ce³⁺,Tb³⁺ Phosphors, ungefähr 54 Gew.-% des Y₂O₃:Eu³⁺Phosphors, ungefähr 5 Gew.-% des Sr₆BP₅O₂₀:Eu²⁺ Phosphors, ungefähr 15 Gew.-% des Mg₄GeO_{5.5}F:Mn⁴⁺ Phosphors und weniger als ungefähr 0,1 Gew.-% des BaMgAl₁₁O₁₇:Eu²⁺ Phosphors enthält..

5. Die Leuchtstoffmischung nach Anspruch 4 wobei die Leuchtstoffmischung 26,8 Gew.-% des LaPO₄:Ce³⁺,Tb³⁺ Phosphors, 54,0 Gew.-% des Y₂O₃:Eu³⁺ Phosphors, 4,7 Gew.-% des Sr₆BP₅O₂₀:Eu²⁺ Phosphors und 14,5 Gew.-% des Mg₄GeO_{5.5}F:Mn⁴⁺Phosphors enthält.

6. Eine kompakte Fluoreszenzlampe, die eine Leuchtstoffbeschichtung besitzt, die eine Mischung eines LaPO₄:Ce³⁺,Tb3⁺ Phosphors, eines Y₂O₃:Eu³⁺ Phosphors, eines Sr₆BP₅O₂₀:Eu²⁺ Phosphors, eines Mg₄GeO_{5.5}F:Mn⁴⁺ Phosphors, und gegebenenfalls eines BaMgAl₁₁O₁₇:Eu²⁺ Phosphors umfasst, wobei die Mischung von 5 bis 20 Gew.-% des Sr₆BP₅O₂₀:Eu²⁺ Phosphors und von 5 bis 30 Gew.-% des Mg₄GeO_{5.5}F:Mn⁴⁺ Phosphors enthält.

7. Die kompakte Fluoreszenzlampe nach Anspruch 6, wobei die Mischung von 40 bis 70 Gew.-% des Y₂O₃:Eu³⁺ Phosphors, von 20 bis 50 Gew.-% des LaPO₄:Ce³⁺,Tb³⁺ Phosphors und von 0 bis 10 Gew.-% des BaMgAl₁₁O₁₇:Eu²⁺ Phosphors enthält.

8. Die kompakte Fluoreszenzlampe nach Anspruch 6, wobei die Lampe Licht erzeugt, das eine korrelierte Farbtemperatur von ungefähr 2700 K besitzt.

9. Die kompakte Fluoreszenzlampe nach Anspruch 6, wobei die Mischung von 20 bis 30 Gew.-% des LaPO₄:Ce³⁺,Tb³⁺ Phosphors, von 40 bis 70 Gew.-% des Y₂O₃:Eu³⁺ Phosphors, von 1 bis 5 Gew.-% des Sr₆BP₅O₂₀:Eu²⁺ Phosphors, von 10 bis 30 Gew.-% des Mg₄GeO_{5.5}F:Mn⁴⁺ Phosphors und von 0 bis 2 Gew.-% des BaMgAl₁₁O₁₇:Eu²⁺ Phosphors enthält.

10. Die kompakte Fluoreszenzlampe nach Anspruch 9, wobei die Mischung ungefähr 27 Gew.-% des LaPO₄:Ce³⁺,Tb³⁺ Phosphors, ungefähr 54 Gew.-% des Y₂O₃:Eu³⁺ Phosphors, ungefähr 5 Gew.-% des Sr₆BP₅O₂₀:Eu²⁺ Phosphors, ungefähr 15 Gew.-% des Mg₄Ge0_{5.5}F:Mn⁴⁺ Phosphors und weniger als ungefähr 0,1 Gew.-% des BaMgAl₁₁O₁₇:Eu²⁺ Phosphors enthält.

11. Die kompakte Fluoreszenzlampe nach Anspruch 10, wobei die Mischung 26,8 Gew.-% des LaPO₄:Ce³⁺,Tb³⁺ Phosphors, 54,0 Gew.-% des Y₂O₃:Eu³⁺ Phosphors, 4,7 Gew.-% des Sr₆BP₅O₂₀:Eu²⁺ Phosphors und 14,5 Gew.-% des Mg₄GeO_{5.5}F:Mn⁴⁺ Phosphors enthält.

12. Die kompakte Fluoreszenzlampe nach Anspruch 11, wobei die Lampe Licht erzeugt, das eine korrelierte Farbtemperatur von ungefähr 2700 K besitzt.

## Revendications

1. Mélange luminophore pour une lampe fluorescente compacte, comprenant :
un luminophore LaPO₄:Ce³⁺,Tb³⁺, un luminophore Y₂O₃:Eu³⁺, un luminophore Sr₆BP₅O₂₀:Eu²⁺, un luminophore Mg₄GeO_{5.5}F;Mn⁴⁺, et éventuellement un luminophore BaMgAl₁₁O₁₇:Eu²⁺, où le mélange contient de 5 % à 20 % en poids du luminophore Sr₆BP₅O₂₀:Eu²⁺ et de 5 % à 30 % en poids du luminophore Mg₄GeO_{5.5}F:Mn⁴⁺.

2. Mélange luminophore selon la revendication 1, où le mélange contient de 40 % à 70 % en poids du luminophore Y₂O₃:Eu³⁺, de 20 % à 50 % en poids du luminophore LaPO₄:Ce³⁺,Tb³⁺, et de 0 % à 10 % en poids du luminophore BaMgAl₁₁O₁₇:Eu²⁺.

3. Mélange luminophore pour une lampe fluorescente compacte, comprenant de 20 % à 30 % en poids d'un luminophore LaPO₄:Ce³⁺,Tb³⁺, de 40 % 70 % en poids d'un luminophore Y₂O₃:Eu³⁺, de 1 % à 5 % en poids d'un luminophore Sr₆BP₅O₂₀:Eu²⁺, de 10 % à 30 % en poids d'un luminophore Mg₄Ge0_{5.5}F:Mn⁴⁺, et de 0 % à 2 % en poids d'un luminophore BaMgAl₁₁O₁₇:Eu²⁺.

4. Mélange luminophore selon la revendication 3, où le mélange luminophore contient environ 27 % en poids du luminophore LaPO₄:Ce³⁺,Tb³⁺, environ 54 % en poids du luminophore Y₂O₃:Eu³⁺, environ 5 % en poids du luminophore Sr₆BP₅O₂₀:Eu²⁺, environ 15 % en poids du luminophore Mg₄GeO_{5.5}F:Mn⁴⁺, et moins d'environ 0,1% en poids du luminophore BaMgAl₁₁O₁₇:Eu²⁺.

5. Mélange luminophore selon la revendication 4, où le mélange luminophore contient 26,8 % en poids du luminophore LaPO₄:Ce³⁺,Tb³⁺, 54,0 % en poids du luminophore Y₂O₃:Eu³⁺, 4,7 % en poids du luminophore Sr₆BP₅O₂₀:Eu²⁺, et 14,5 % en poids du luminophore Mg₄GeO_{5.5}F:Mn⁴⁺.

6. Lampe fluorescente compacte ayant un revêtement luminophore comprenant un mélange d'un luminophore LaPO₄:Ce³⁺,Tb³⁺, un luminophore Y₂O₃:Eu³⁺, un luminophore Sr₆BP₅O₂₀:Eu²⁺, un luminophore Mg₄GeO_{5.5}F:Mn⁴⁺, et éventuellement un luminophore BaMgAl₁₁O₁₇:Eu²⁺, où le mélange contient de 5 % à 20 % en poids du luminophore Sr₆BP₅O₂₀:Eu²⁺ et de 5 % à 30 % en poids du luminophore Mg₄GeO_{5.5}F:Mn⁴⁺.

7. Lampe fluorescente compacte selon la revendication 6, où le mélange contient de 40 % à 70 % en poids du luminophore Y₂O₃:Eu³⁺, de 20 % à 50 % en poids du luminophore, LaPO₄:Ce³⁺,Tb³⁺, et de 0 % à 10 % en poids du luminophore BaMgAl₁₁O₁₇:Eu²⁺.

8. Lampe fluorescente compacte selon la revendication 6, où la lampe produit de la lumière ayant une température de couleur corrélée d'environ 2700 K.

9. Lampe fluorescente compacte selon la revendication 6, où le mélange contient de 20 % à 30 % en poids du luminophore LaPO₄:Ce³⁺,Tb³⁺, de 40 % à 70 % en poids du luminophore Y₂O₃:Eu³⁺, de 1 % à 5 % en poids du luminophore Sr₆BP₅O₂₀:Eu²⁺ de 10 %.à 30 % en poids du luminophore Mg₄GeO_{5.5}F:Mn⁴⁺ et de 0 % à 20 % en poids du luminophore BaMgAl₁₁O₁₇;Eu²⁺.

10. Lampe fluorescente compacte selon la revendication 9, où le mélange contient environ 27 % en poids du luminophore LaPO₄:Ce³⁺,Tb³⁺, environ 54 % en poids du luminophore Y₂O₃:Eu³⁺, environ 5 % en poids du luminophore Sr₆BP₅O₂₀:Eu²⁺, environ 15 % en poids du luminophore Mg₄GeO_{5.5}F:Mn⁴⁺, et moins d'environ 0,1% en poids du luminophore BaMgAl₁₁O₁₇:Eu²⁺.

11. Lampe fluorescente compacte selon la revendication 10, où le mélange contient 26,8 % en poids du luminophore LaPO₄:Ce³⁺,Tb³⁺, 54,0 % en poids du luminophore Y₂O₃:Eu³⁺, 4,7 % en poids du luminophore Sr₆BP₅O₂₀:Eu²⁺, et 14,5 % en poids du luminophore Mg₄GeO_{5,5}F:Mn⁴⁺.

12. Lampe fluorescente compacte selon la revendication 11, où la lampe produit de la lumière ayant une température de couleur corrélée d'environ 2700 K.
